# EUROPEAN PATENT SPECIFICATION

(11) **EP 3 576 115 B1**
(45) Date of publication and mention of the grant of the patent: **12.07.2023**
(21) Application number: 19175364.9
(22) Date of filing: 20.05.2019
(51) Int. Cl.: H01F 27/28

(54) **ELECTRONIC COMPONENT**
ELEKTRONISCHE KOMPONENTE
COMPOSANT ÉLECTRONIQUE

(30) Priority: 01.06.2018 JP 2018106182
(43) Date of publication of application: 04.12.2019
(73) Proprietor: Tamura Corporation, Tokyo 178-8511 (JP)
(72) Inventor: OGAWA, Hiroo, Saitama, 350-0214 (JP); YOSHINO, Tomohiko, Saitama, 350-0214 (JP)
(74) Representative: Plougmann Vingtoft a/s

(56) References cited:
- US-A1- 2004 032 313
- US-A1- 2008 278 275
- US-B1- 6 198 374

## Description

### Technical Field

The present invention relates to an electronic component, specifically relates to an electronic component having a planar transformer.

### Background Art

The prior art described in the publication (JP5310857B1) issued by Japan Patent Office is a coil-integrated switching power supply module. This module has a printed coil transformer which is one form of a planar transformer. The printed coil transformer has a combined structure of a stack of boards and a magnetic core, and the stack is composed of many stacked double-sided boards. On each of the double-sided boards, patterns of primary coils or patterns of secondary coils are formed. The double-sided boards which are adjacent in the stack are insulated from each other by a prepreg filled therebetween.

The document US2004/032313 A1 discloses an electronic component according to the preamble of claim 1.

The structure of the prior art, however, has a problem of difficulty in improving withstand (withstand voltage) performance of the whole transformer. This is because the pattern of the primary coil and the pattern of the secondary coil of the transformer are formed in each layer between the adjacent both-sided boards, and naturally, only the minimum insulation distance (corresponding to the thickness of the both-sided board or the prepreg) can be taken between the primary coil and the secondary coil. Further, when the patterns of the coils in the plurality of layers are connected, positions of through holes overlap with positions of the patterns of the coils, which also makes it structurally more difficult to provide the insulation distance. This further prevents the improvement in withstand performance.

### Summary of the invention

It is an object of the present invention to provide an art capable of improving withstand performance. To attain this object, the present invention adopts the following solutions.

In an electronic component of the present invention, a magnetic core is attached to a circuit board in which a primary circuit and a secondary circuit are each formed using a plurality of layers of wiring patterns. The magnetic core magnetically couples the primary circuit and the secondary circuit, and consequently, a planar transformer is formed. The wiring patterns include those forming a primary winding and a secondary winding, and the windings are each spirally formed around the magnetic core which penetrates through the circuit board.

A solution is to improve a positional relation between the windings and via holes in the circuit board. Specifically, the spiral windings each have an inner peripheral end and an outer peripheral end connected to the wiring patterns of other layers through the via holes, and at this time, the insulation distance is smaller as the position of the via hole is closer to the winding of the other side (the secondary winding if the via hole is the primary via hole, and the primary winding if the via hole is the secondary via hole), and accordingly the withstand performance of the whole circuit becomes lower. In particular, since the inner peripheral ends are usually located near the magnetic core, the via holes of the primary side and secondary side are close to the windings of the other sides.

In the present invention, via holes are formed which connect both ends that are located in the same layer, of the primary winding to the primary circuit of other layers, outside a region that overlaps with the secondary winding in a layer direction, and via holes are formed which connect both ends that are located in the same layer, of the secondary winding to the secondary circuit of other layers, outside a region that overlaps with the primary winding in the layer direction. This prevents the insulation distance from becoming small, enabling an improvement in the withstand performance of the whole circuit.

As described above, according to the present invention, an improvement in withstand performance is attained.

### Brief description of the drawings

In the drawings used in the description of an embodiment:
FIG. 1 is an exploded perspective view schematically illustrating the structure of an electronic component of one embodiment;
FIG. 2 is an exploded perspective view illustrating only a circuit board module;
FIG. 3 is an exploded perspective view schematically illustrating a multilayer structure of the circuit board module;
FIG. 4 is a vertical sectional view taken along the IV-IV line in FIG. 1;
FIG. 5 is a vertical sectional view taken along the V-V line in FIG. 1;
FIG. 6A to FIG. 6D are plan views of layers from a first layer to a fourth layer; and
FIG. 7A to FIG. 7D are plan views of layers from a fifth layer to an eighth layer.

### Preferred embodiments

An embodiment will be hereinafter described with reference to the drawings.

### [Whole Structure]

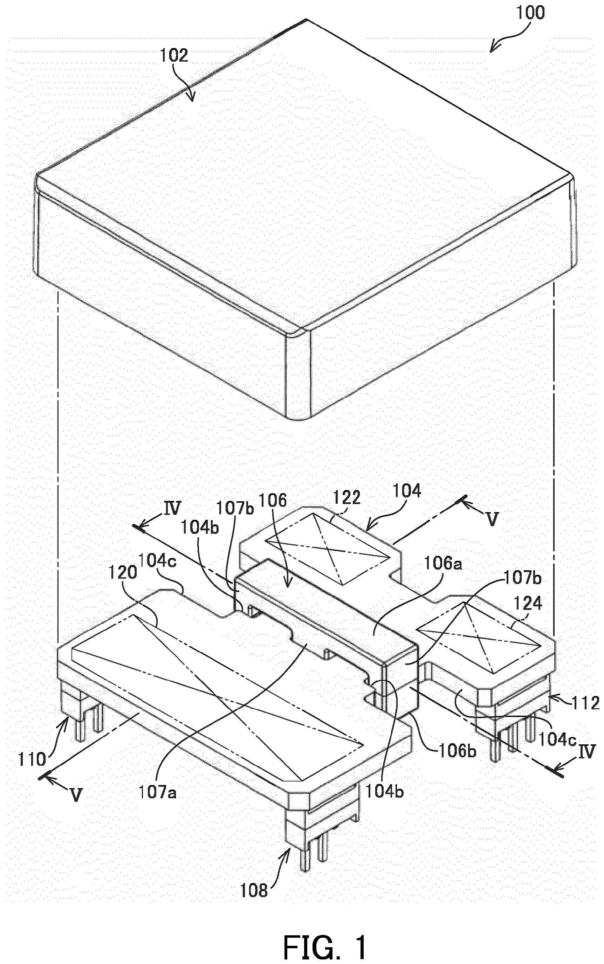

FIG. 1 schematically illustrates the structure of an electronic component 100 of one embodiment. In this embodiment, a module-type DC-DC converter is taken as an example of the electronic component 100, but an example of the electronic component 100 is not limited to this. Hereinafter, the structure of the electronic component 100 will be described.

The electronic component 100 is composed roughly of a resin case 102 and a circuit board module 104, for instance. The inside of the resin case 102 is sealed with a filler (for example, urethane resin) in a state where the circuit board module 104 is housed in the resin case 102, and as a result, the electronic component 100 is completed. The resin case 102 has a hollow cover shape, and its lower surface has the same shape as the outer shape of the circuit board module 104 and is open.

A magnetic core 106 is combined with the circuit board module 104. In the circuit board module 104, a primary circuit 120 and two systems of secondary circuits 122, 124 of the DC-DC converter are mainly formed, and when the DC-DC converter operates, the primary circuit 120 is magnetically coupled with the secondary circuits 122, 124 by the magnetic core 106. Note that the primary circuit 120 and the secondary circuits 122, 124 have various electronic components mounted on their upper surfaces in terms of the direction in FIG. 1 of the circuit board module 104, but the illustration of these electronic components is omitted.

### [Circuit Board Module and Magnetic Core]

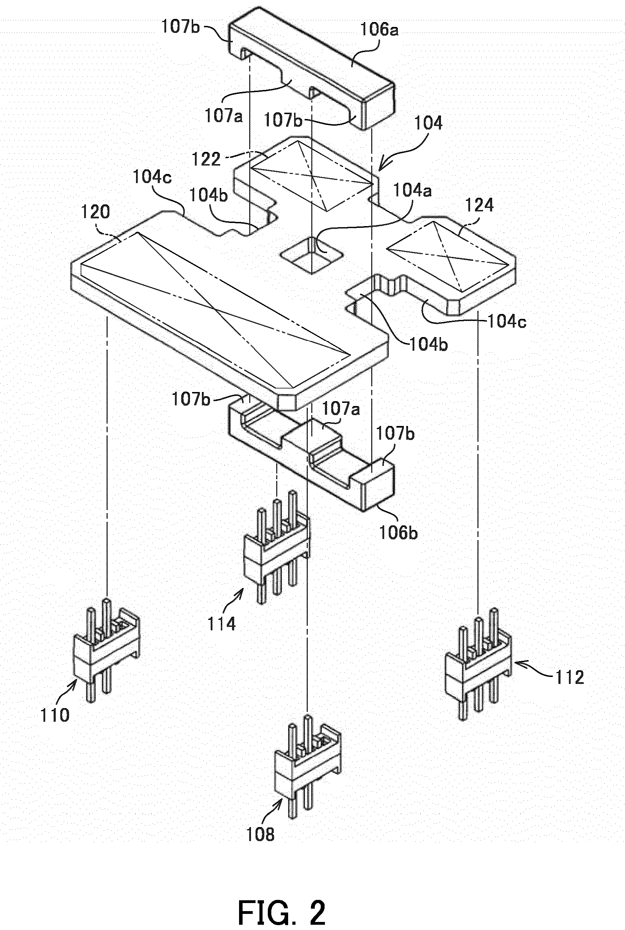

FIG. 2 illustrates only the circuit board module 104 in a disassembled state. In the circuit board module 104, not only the magnetic core 106 is combined as described above but also a plurality of input terminal arrays 108, 110 and output terminal arrays 112, 114 are mounted.

The magnetic core 106 has, for example, an E-E structure, in which two core parts 106a, 106b are combined from both surface sides of the circuit board module 104 so as to face each other. In this embodiment, there is no gap between the two core parts 106a, 106b of the magnetic core 106, but there may be a gap therebetween. For the assembly of the magnetic core 106, the circuit board module 104 has an insertion hole 104a formed at a position close to the center, and in addition, has a pair of cutout portions 104b formed in both side edge portions with the insertion hole 104a therebetween.

The insertion hole 104a is opened in a substantially square shape in both the surfaces of the circuit board module 104 and penetrates through the circuit board module 104 in the thickness direction, and in the insertion hole 104a, middle legs 107a of the magnetic core 106 are inserted from both sides.

The pair of cutout portions 104b are formed in a U-shape from both the side edge portions toward an inner side of the circuit board module 104, and both outer legs 107b of the magnetic core 106 are fitted to the pair of cutout portions 104b. Note that, in this embodiment, the pair of cutout portions 104b form holding spaces 104c. Specifically, side portions of the pair of cutout portions 104b widen in the width direction by one step, which makes the holding spaces 104c to function as follows. That is, the holding spaces 104c function as spaces for an assembly work of the magnetic core 106. The assembly work includes, for example, in the state where the magnetic core 106 is assembled to the circuit board module 104 as illustrated in FIG. 1, applying an adhesive on abutting surfaces in both sides of the two core parts 106a, 106b, sticking an adhesive tape, or clipping the core parts 106a, 106b together. The holding spaces 104c improve assembly workability of the electronic component 100 to enhance production efficiency, thereby capable of contributing to a manufacturing cost reduction.

The input terminal arrays 108, 110 are mounted on the circuit board module 104 through not illustrated through holes to be connected to the primary circuit 120. The output terminal arrays 112, 114 are also mounted on the circuit board module 104 through not illustrated through holes to be connected to the secondary circuits 122, 124. In the completed electronic component 100, these input terminal arrays 108, 110 and output terminal arrays 112, 114 project downward from the resin case 102.

### [Boards for Stacking]

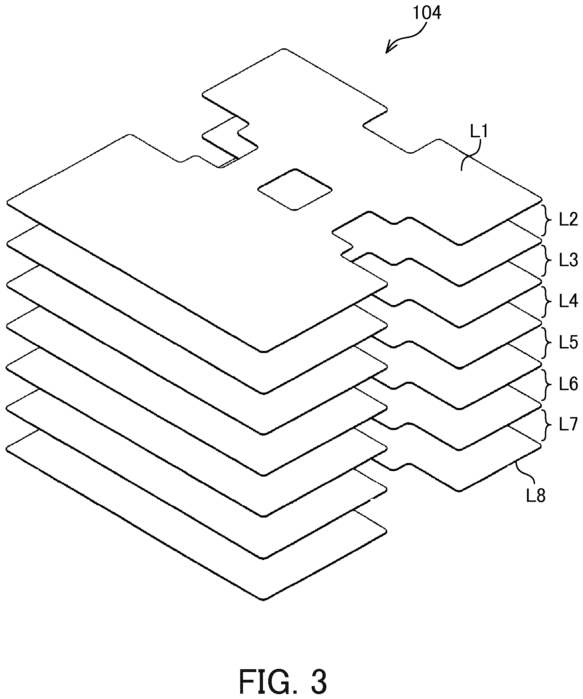

FIG. 3 schematically illustrates a multilayer structure of the circuit board module 104 and illustrates its state of being disassembled into many boards for stacking. In the completed circuit board module 104, all the boards for stacking are integrated because they have undergone firing, and in this structure, the post-disassembly is not possible, but here the disassembled state is illustrated for convenience of the understanding of the multilayer structure.

The circuit board module 104 has the multilayer structure composed of a stack of, for example, seven sheets of the boards for stacking (called sheet boards, green sheets, or the like) which have been integrally fired. Hereinafter, for convenience' sake, an upper surface of the uppermost layer in the stacking direction will be referred to as a first layer L1, a space between its lower surface and an upper surface of a board for stacking at the second highest position as a second layer L2, a space between its lower surface and an upper surface of a board for stacking at the third highest position as a third layer L3, a space between its lower surface and an upper surface of a board for stacking at the fourth highest position as a fourth layer L4, a space between its lower surface and an upper surface of a board for stacking at the fifth highest position as a fifth layer L5, a space between its lower surface and an upper surface of a board for stacking at the sixth highest position as a sixth layer L6, a space between its lower surface and an upper surface of a board for stacking at the seventh highest position as a seventh layer L7, and a lower surface of the lowest board for stacking as an eighth layer L8.

### [Layer Section]

First, the layer structure will be described with reference to sections of the circuit board module 104.

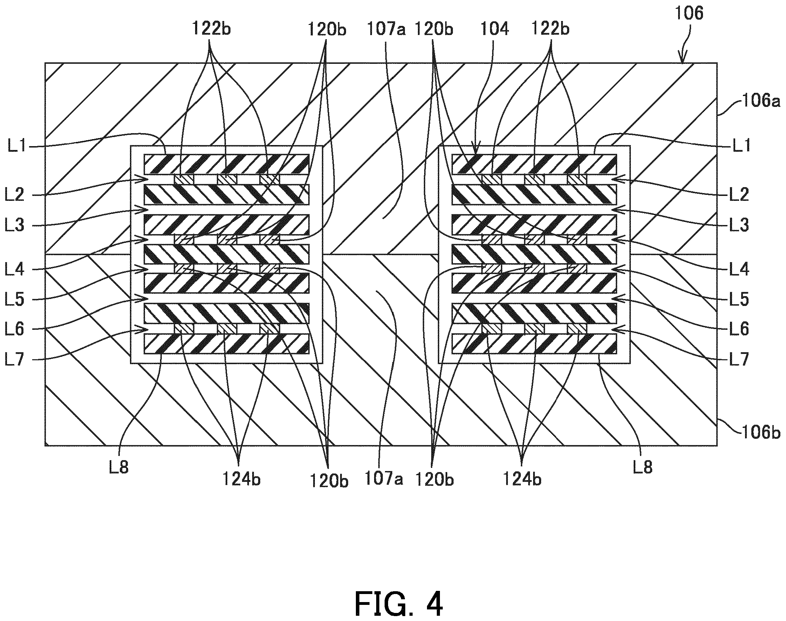

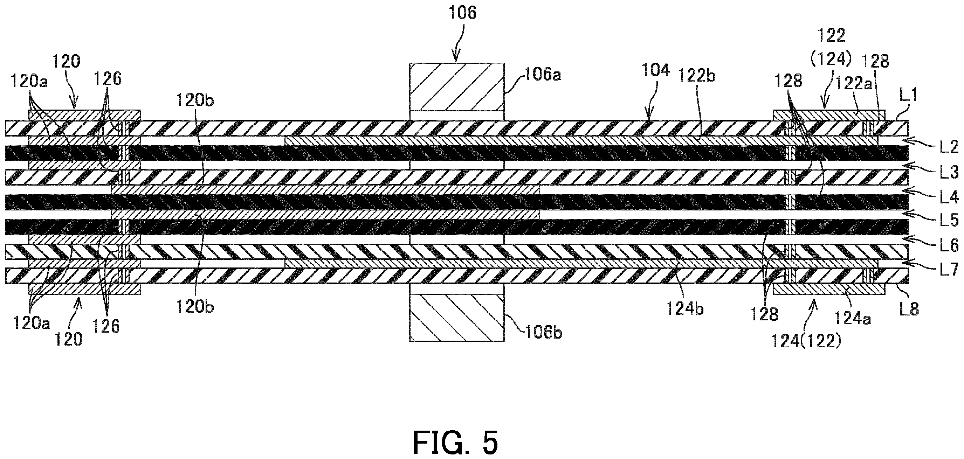

FIG. 4 illustrates a vertical section of the circuit board module 104 and the magnetic core 106 along the longitudinal direction of the magnetic core 106 (IV-IV section in FIG. 1). Further, FIG. 5 illustrates a vertical section of the circuit board module 104 and the magnetic core 106 along the width direction of the magnetic core 106 (V-V section in FIG. 1). Note that, in FIG. 4 and FIG. 5, the layers of the boards for stacking and wiring patterns are each illustrated with an exaggerated thickness. Hereinafter, the arrangement of the wiring patterns in the layers will be described.

### [First Layer (Uppermost Layer)]

The first layer L1 is located on the upper surface of the circuit board module 104. In the first layer L1, a primary pattern 120a constituting a wiring pattern of the primary circuit 120 is mainly formed, and a secondary pattern 122a constituting a wiring pattern of the secondary circuit 122 is also formed. These primary pattern 120a and secondary pattern 122a are each arranged at a position apart from regions immediately under and near the magnetic core 106 by a predetermined insulation distance.

### [Second Layer (Second Highest Layer)]

The second layer L2 is located in a layer inside the circuit board module 104. In the second layer L2, a primary pattern 120a and in addition, a secondary winding 122b constituting a wiring pattern of the secondary circuit 122 is formed. The primary pattern 120a is arranged apart from the magnetic core 106, but the secondary winding 122b is arranged so as to depict a spiral shape around the magnetic core 106 (middle legs 107a).

### [Third Layer (Third Highest Layer)]

The third layer L3 is located in a layer inside the circuit board module 104. In the third layer L3, only a primary pattern 120a is arranged.

### [Fourth Layer (Fourth Highest Layer)]

The fourth layer L4 is located in a layer inside the circuit board module 104. In the fourth layer L4, only a primary winding 120b is formed. The primary winding 120b is arranged so as to depict a spiral shape around the magnetic core 106 (middle legs 107a).

### [Fifth Layer (Fifth Highest Layer)]

The fifth layer L5 is located in a layer inside the circuit board module 104. In the fifth layer L5, only a primary winding 120b is formed. As in the aforesaid fourth layer L4, the primary winding 120b is arranged so as to depict a spiral shape around the magnetic core 106.

### [Sixth Layer (Sixth Highest Layer)]

The sixth layer L6 is located in a layer inside the circuit board module 104. In the sixth layer L6, only a primary pattern 120a is arranged.

### [Seventh Layer (Seventh Highest Layer)]

The seventh layer L7 is located in a layer inside the circuit board module 104. In the seventh layer L7, a primary pattern 120a and in addition a secondary winding 124b constituting a wiring pattern of the secondary circuit 124 which is a different system from that in the first and second layers are formed. As in the aforesaid second layer, the primary pattern 120a is arranged apart from the magnetic core 106, but the secondary winding 124b is arranged so as to depict a spiral shape around the magnetic core 106 (middle legs 107a).

### [Eighth Layer (Eighth Highest Layer)]

The eighth layer L8 is located on the lower surface of the circuit board module 104. In the eighth layer L8, a primary pattern 120a constituting a wiring pattern of the primary circuit 120 is mainly formed, and in addition a secondary pattern 124a constituting a wiring pattern of the secondary circuit 124 which is a different system from that in the first and second layers are formed. These primary pattern 120a and secondary pattern 124a are each arranged at a position apart from regions immediately under and near the magnetic core 106 by a predetermined insulation distance when seen from the lower direction of the magnetic core 106.

### [Via Holes]

As illustrated in FIG. 5, in the circuit board module 104, primary via holes 126 and secondary via holes 128 are also formed. The primary via holes 126 each connect the wiring patterns in a plurality of layers of the primary circuit 120, for example, connect the primary pattern 120a and the primary winding 120b. The secondary via holes 128 each connect the wiring patterns of the plurality of layers of the secondary circuits 122, 124, for example, connect the secondary pattern 122a and the secondary winding 122b, and the secondary pattern 124a and the secondary winding 122b. Note that the illustrated width-direction positions of the primary via holes 126 and the secondary via holes 128 are only for convenience' sake.

### [Layer Plane]

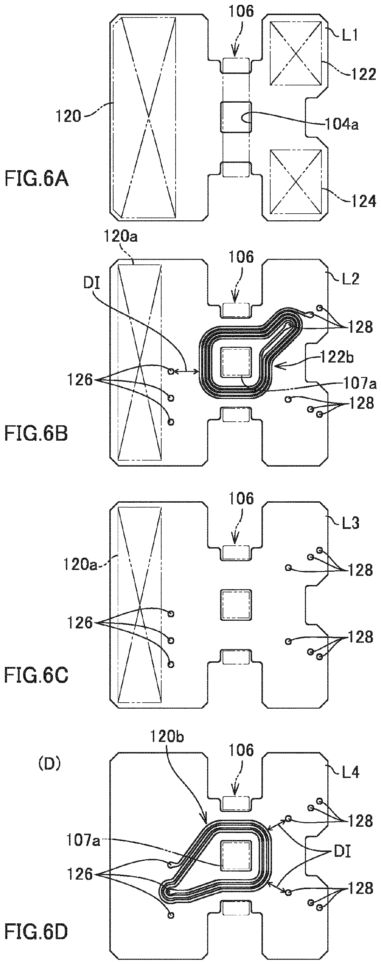

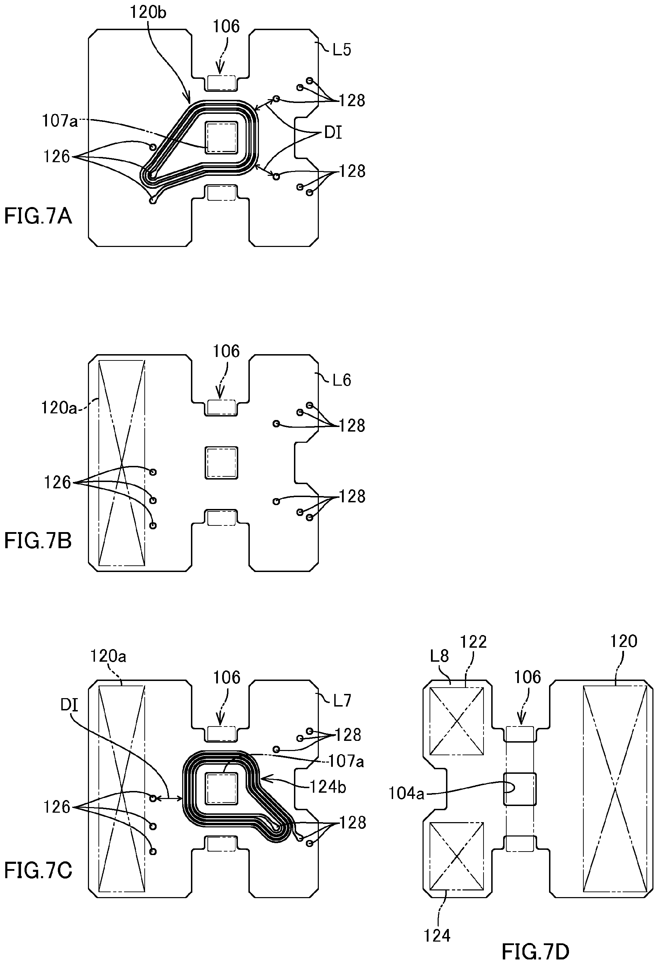

Next, the planar structures of the layers will be described. FIG. 6A to FIG. 6D are plan views of the layers from the first layer L1 to the fourth layer L4. FIG. 7A to FIG. 7D are plan views of the layers from the fifth layer L5 to the eighth layer L8. Note that, as the plan view of the eighth layer L8, a plane seen from the bottom (lower surface) of the circuit board module 104 is illustrated. In FIG. 6A to FIG. 6D and FIG. 7A to FIG. 7D, detailed illustrations of the shapes of the wiring patterns, the arrangements of other via holes and through holes, and so on are omitted.

### [First Layer (Uppermost Layer)]

FIG. 6A: In the first layer L1, the primary circuit 120 and the two systems of secondary circuits 122, 124 (including the wiring patterns and mounted components) are formed as described above, but none of the primary winding 120b and the secondary windings 122b, 124b is arranged. Further, insulation distances of the primary circuit 120 and the secondary circuits 122, 124 from the magnetic core 106 are large enough to improve withstand (withstand voltage) performance. In this embodiment, none of the primary winding 120b and the secondary windings 122b, 124b is formed in the first layer L1 and thus they are not exposed to the periphery of the magnetic core 106, which also greatly contributes to an improvement in withstand performance.

### [Second Layer (Second Highest Layer)]

FIG. 6B: In the second layer L2, the wiring pattern of the secondary winding 122b is formed as described above. Here, when focusing on the pattern shape of the secondary winding 122b, it is seen that the positions of its outer peripheral end and inner peripheral end (not denoted by reference signs) are both apart from the middle legs 107a of the magnetic core 106 in an outward direction. Besides, in the second layer L2, the primary pattern 120a is formed.

### [Third Layer (Third Highest Layer)]

FIG. 6C: In the third layer L3, only the primary pattern 120a is mainly formed as described above. Thus, this embodiment does not have a structure in which the primary winding 120b is formed so as to be adjacent to the secondary winding 122b of the second layer L2.

### [Fourth Layer (Fourth Highest Layer)]

FIG. 6D: In the fourth layer L4, the wiring pattern of the primary winding 120b is formed apart from the second layer L2 with the third layer L3 therebetween. Here as well, when focusing on the pattern shape of the primary winding 120b, it is seen that the positions of its outer peripheral end and inner peripheral end (not denoted by reference signs) are both apart from the middle legs 107a of the magnetic core 106 in a direction which is the outward direction and the direction opposite to the direction in which those of the secondary winding 122b are apart.

### [Provision of Insulation Distance]

As is apparent from the planar structures of the layers described so far, the insulation distance is provided in this embodiment as follows.
(1) FIG. 6C: The third layer L3 is interposed as an insulating layer between the second layer L2 and the fourth layer L4, and in the third layer L3, in its regions overlapping with the secondary winding 122b and the primary winding 120b in the layer direction, neither of these wiring patters is formed. Consequently, the insulation distance corresponding to two layers (larger than one layer) is provided between the primary winding 120b and the secondary winding 122b.
(2) FIG. 6B and FIG. 6D: The primary winding 120b and the secondary winding 122b are both arranged such that not only their outer peripheral ends but also their inner peripheral ends are apart in the outward direction from the middle legs 107a of the magnetic core 106. Specifically, the secondary winding 122b of the second layer L2 is arranged such that neither of its inner peripheral end and outer peripheral end overlaps with the primary winding 120b of the fourth layer L4 in the layer direction, and the primary winding 120b of the fourth layer L4 is arranged such that neither of its inner peripheral end and outer peripheral end overlaps with the secondary winding 122b of the second layer L2 in the layer direction. Accordingly, in the second layer L2, the positions of the primary via holes 126 are outside a winding region of the secondary winding 122b, and a predetermined insulation distance DI is provided therebetween. Further, in the fourth layer L4, the positions of the secondary via holes 128 are outside a winding region of the primary winding 120b, and a predetermined insulation distance DI is also provided therebetween. Note that the insulation distances DI in the second layer L2 and the fourth layer L4 may be different.

Typically, the wiring patterns of the primary winding 120b and the secondary winding 122b basically depict the spiral shape around the middle legs 107a, and the purpose of this arrangement is to converge a magnetic flux in the magnetic core 106. Accordingly, the inner peripheral ends are thought to be naturally arranged near the middle legs 107a. However, in this embodiment, the inner peripheral ends are also disposed intentionally at positions apart from the middle legs 107a in the outward direction. This ensures that the insulation distance DI between the primary winding 120b and the secondary via holes 128 of the other side is large, and the insulation distance DI between the secondary winding 122b and the primary via holes 126 of the other side is large as described above.

(3) FIG. 6A: In addition, the non-exposure of the secondary winding 122b to the outer surface of the circuit board module 104 also ensures that the insulation distance is provided from the magnetic core 106.

Next, the insulation from the secondary circuit 124 which is a different system will be described with reference to FIG. 7A to FIG. 7D.

### [Fifth Layer (Fifth Highest Layer)]

FIG. 7A: In the fifth layer L5, the wiring pattern of the primary winding 120b is formed. Here as well, when focusing on the pattern shape of the primary winding 120b, it is seen that the positions of its outer peripheral end and inner peripheral end (not denoted by reference signs) are both apart from the middle legs 107a of the magnetic core 106 in a direction which is the outward direction and the direction opposite to the direction in which those of the secondary windings 122b, 124b are apart.

### [Sixth Layer (Sixth Highest Layer)]

FIG. 7B: In the sixth layer L6, only the primary pattern 120a is mainly formed. Therefore, this embodiment does not have a structure in which the secondary winding 124b is formed so as to be adjacent to the primary winding 120b of the fifth layer L5.

### [Seventh Layer (Seventh Highest Layer)]

FIG. 7C: As described above, in the seventh layer L7, the wiring pattern of the secondary winding 124b is formed apart from the fifth layer L5 with the sixth layer L6 therebetween. Here as well, when focusing on the pattern shape of the secondary winding 124b, it is seen that the positions of its outer peripheral end and inner peripheral end (not denoted by reference signs) are both apart from the middle legs 107a of the magnetic core 106 in the outward direction. Note that, in the seventh layer L7, besides the secondary winding 124b, the primary pattern 120a is formed.

### [Eighth Layer (Eighth Highest Layer)]

FIG. 7D: In the eighth layer L8, the primary circuit 120 and the two systems of secondary circuits 122, 124 (including the wiring patterns and mounted components) are formed as described above, but none of the primary winding 120b and the secondary windings 122b, 124b is formed. Further, insulation distances of the primary circuit 120 and the secondary circuits 122, 124 from the magnetic core 106 are large enough to improve withstand performance. In this embodiment, the eighth layer L8 has no primary winding 120b and secondary windings 122b, 124b either, and therefore they are not exposed to the periphery of the magnetic core 106, which also contributes greatly to an improvement in withstand performance.

### [Provision of Insulation Distance]

As is apparent from the planar structures of the other layers, the insulation distance is further provided as follows in this embodiment.

(4) FIG. 7B: The sixth layer L6 is interposed as an insulating layer between the fifth layer L5 and the seventh layer L7, and in the sixth layer L6, in its regions overlapping with the primary winding 120b and the secondary winding 124b in the layer direction, neither of these wiring patterns is formed. Consequently, the insulation distance corresponding to two layers (larger than one layer) is provided between the primary winding 120b and the secondary winding 124b.

(5) FIG. 7A and FIG. 7C: The primary winding 120b and the secondary winding 124b are both arranged such that not only their outer peripheral ends but also their inner peripheral ends are apart in the outward direction from the middle legs 107a of the magnetic core 106. Specifically, the secondary winding 124b of the seventh layer L7 is arranged such that neither of its inner peripheral end and outer peripheral end overlaps with the primary winding 120b of the fifth layer L5 in the layer direction, and the primary winding 120b of the fifth layer L5 is arranged such that neither of its inner peripheral end and outer peripheral end overlaps with the secondary winding 124b of the seventh layer L7 in the layer direction. Accordingly, in the fifth layer L5, the positions of the secondary via holes 128 are outside the winding region of the primary winding 120b, and a predetermined insulation distance DI is provided therebetween. Further, in the seventh layer L7, the positions of the primary via holes 126 are outside the winding region of the secondary winding 124b, and a predetermined insulation distance DI is also provided therebetween. Note that the insulation distances DI in the fifth layer L5 and the seventh layer L7 may be different.

(6) FIG. 7D: In addition, the non-exposure of the secondary winding 124b to the outer surface (lower surface) of the circuit board module 104 also ensures that the insulation distance is provided from the magnetic core 106.

According to the electronic component 100 of this embodiment, by providing the insulation distance among the primary circuit 120, the secondary circuit 122, and the magnetic core 106, it is possible to improve the withstand performance of the whole circuit. Therefore, in the case where the electronic component 100 is the DC-DC converter, it is usable in a higher-voltage region, which can enhance its general versatility and applicability.

The embodiment has the circuit structure including the two systems of secondary circuits 122, 124, but it may have a circuit structure including only the single system of secondary circuit 122 (or secondary circuit 124) for the primary circuit 120. The layer structure in this case can be a six-layer structure of the layers in FIG. 6A, FIG. 6B, FIG. 6C, FIG. 6D, FIG. 7B, and FIG. 7C in the order from the top.

The patterns of the primary winding 120b and the secondary windings 122b, 124b are not limited to the examples illustrated in FIG. 6A to FIG. 6D and FIG. 7A to FIG. 7D, and may have other pattern shapes. For example, the pattern of the primary winding 120b may have such a pattern shape that its portions except the inner peripheral end and the outer peripheral end are closer to the middle legs 107a of the magnetic core 106. Further, the positions of the inner peripheral ends and the outer peripheral ends of the primary winding 120b and the secondary windings 122b, 124b may be more apart from the middle legs 107a than in the examples illustrated in FIG. 6B, FIG. 6D, FIG. 7A, and FIG. 7C.

The magnetic core 106 may be of another type such as an E-I type, a U-U type and a U-I type besides the E-E type. Further, the two core parts 106a, 106b may be bonded together with an adhesive, may be bonded together with an adhesive tape, or may be fixed with a member such as a clip sandwiching these.

The outer shape of the circuit board module 104 is not limited to the illustrated example, and may be a circular shape or any other polygonal shape.

In the embodiment, the electronic component 100 is the DC-DC converter, but may be implemented as a planar transformer or a reactor.

Besides, the structure described with reference to the drawings in the embodiment is only a preferred example. Various kinds of elements may be added to the basic structure of the embodiment, or some of the elements may be replaced.

## Claims

1. An electronic component (100) which includes: a circuit board (104) with a multilayer structure in which a plurality of boards for stacking are stacked to be integrated and exposed surfaces of outer ones of the boards for stacking materials and spaces between surfaces of the boards for stacking in close contact inside the circuit board (104) each form one layer (L1 to L8), the circuit board (104) including a primary circuit (120) and a secondary circuit (122, 124) each formed throughout partial layers that are smaller in number than and included in the plurality of layers; and a magnetic core (106) attached to the circuit board (104) to magnetically couple the primary circuit (120) and the secondary circuit (122, 124), wherein the circuit board (104) comprises:
a primary winding (120b) which is formed spirally around the magnetic core (106) in a layer (L4, L5) inside the circuit board (104) to constitute part of the primary circuit (120); and
a secondary winding (122b, 124b) which is formed spirally around the magnetic core (106) in a layer (L2, L7) inside the circuit board (104) to constitute part of the secondary circuit (122, 124),
**characterised in that** via holes (126) are formed which connect both ends that are located in the same layer, of the primary winding (120b) to the primary circuit (120) of other layers (L1 to L3, L6 to L8), outside a region that overlaps with the secondary winding (122b, 124b) in a layer direction, and via holes (128) are formed which connect both ends that are located in the same layer, of the secondary winding (122b, 124b) to the secondary circuit (122, 124) of other layers (L1, L8), outside a region that overlaps with the primary winding (120b) in the layer direction.

2. The electronic component of claim 1,
**characterized in that** the circuit board (104) further comprises:
an insulating layer (L3, L6) interposed between the layer (L4, L5) in which the primary winding (120b) is formed and the layer (L2, L7) in which the secondary winding (122b, 124b) is formed, and not having the windings (120b, 122b, 124b).

3. The electronic component of claim 1 to 3,
**characterized in that** the primary winding (120b) and the secondary winding (122b, 124b) are formed such that winding regions of the primary winding (120b) and the secondary winding (122b, 124b) overlap with each other in the layer direction in the circuit board (104) and both ends of each of the primary winding (120b) and the secondary winding (122b, 124b) are at positions not overlapping with the winding region of the other one of the primary winding (120b) and the secondary winding (122b, 124b) in the layer direction.

4. The electronic component of any one of claims 1 to 3,
**characterized in that** the primary winding (120b) and the secondary winding (122b, 124b) are formed only in the layers inside the circuit board (104) other than outer surfaces of the circuit board (104).

## Patentansprüche

1. Elektronische Komponente (100), die Folgendes beinhaltet: eine Leiterplatte (104) mit einer mehrschichtigen Struktur, in der eine Vielzahl von Platten zum Stapeln gestapelt ist, um integriert zu sein, und freiliegende Oberflächen von äußeren Platten zum Stapeln von Materialien und Räume zwischen Oberflächen der Platten zum Stapeln in engem Kontakt innerhalb der Leiterplatte (104) jeweils eine Schicht (L1 bis L8) bilden, wobei die Leiterplatte (104) eine primäre Schaltung (120) und eine sekundäre Schaltung (122, 124) beinhaltet, die jeweils durch Teilschichten hindurch gebildet sind, die zahlenmäßig kleiner sind als die Vielzahl von Schichten und in diesen enthalten sind; und einen Magnetkern (106), der an der Leiterplatte (104) angebracht ist, um die primäre Schaltung (120) und die sekundäre Schaltung (122, 124) magnetisch zu koppeln,
wobei die Leiterplatte (104) umfasst:
eine primäre Wicklung (120b), die spiralförmig um den Magnetkern (106) in einer Schicht (L4, L5) innerhalb der Leiterplatte (104) ausgebildet ist, um einen Teil der primären Schaltung (120) zu bilden; und
eine sekundäre Wicklung (122b, 124b), die spiralförmig um den Magnetkern (106) in einer Schicht (L2, L7) innerhalb der Leiterplatte (104) ausgebildet ist, um einen Teil der sekundären Schaltung (122, 124) zu bilden,
**dadurch gekennzeichnet, dass** Durchgangslöcher (126) ausgebildet sind, die beide Enden, die sich in derselben Schicht befinden, der primären Wicklung (120b) mit der primären Schaltung (120) anderer Schichten (L1 bis L3, L6 bis L8) außerhalb eines Bereichs verbinden, der sich mit der sekundären Wicklung (122b, 124b) in einer Schichtrichtung überlappt, und Durchgangslöcher (128) ausgebildet sind, die beide Enden, die sich in derselben Schicht befinden, der sekundären Wicklung (122b, 124b) mit der sekundären Schaltung (122, 124) anderer Schichten (L1, L8) außerhalb eines Bereichs, der sich mit der primären Wicklung (120b) in der Schichtrichtung überlappt, verbinden.

2. Elektronische Komponente nach Anspruch 1,
**dadurch gekennzeichnet, dass** die Leiterplatte (104) weiter umfasst: eine Isolierschicht (L3, L6), die zwischen der Schicht (L4, L5), in der die primäre Wicklung (120b) ausgebildet ist, und der Schicht (L2, L7), in der die sekundäre Wicklung (122b, 124b) ausgebildet ist, angeordnet ist und nicht die Wicklungen (120b, 122b, 124b) aufweist.

3. Elektronische Komponente nach Anspruch 1 bis 3,
**dadurch gekennzeichnet, dass** die primäre Wicklung (120b) und die sekundäre Wicklung (122b, 124b) so ausgebildet sind, dass sich Wicklungsbereiche der primären Wicklung (120b) und der sekundären Wicklung (122b, 124b) in der Leiterplatte (104) in der Schichtrichtung überlappen und beide Enden von jeder von der primären Wicklung (120b) und der sekundären Wicklung (122b, 124b) jeweils an Positionen liegen, die sich mit dem Wicklungsbereich der jeweils anderen von der primären Wicklung (120b) und der sekundären Wicklung (122b, 124b) in der Schichtrichtung nicht überlappen.

4. Elektronische Komponente nach einem der Ansprüche 1 bis 3,
**dadurch gekennzeichnet, dass** die primäre Wicklung (120b) und die sekundäre Wicklung (122b, 124b) nur in den Schichten innerhalb der Leiterplatte (104) ausgebildet sind, die keine äußeren Oberflächen der Leiterplatte (104) sind.

## Revendications

1. Composant électronique (100) qui inclut : une carte à circuit imprimé (104) ayant une structure multicouche dans laquelle une pluralité de plaquettes pour empilement sont empilées pour être intégrées et les surfaces exposées des plaquettes extérieures des plaquettes pour empilement les matériaux et les espaces entre les surfaces des plaquettes pour empilement en contact étroit à l'intérieur de la carte à circuit imprimé (104) forment chacun une couche (L1 à L8), la carte à circuit imprimé (104) incluant un circuit primaire (120) et un circuit secondaire (122, 124) formés chacun partout au sein de couches partielles qui sont en plus faible nombre que et incluses dans la pluralité de couches ; et un noyau magnétique (106) fixé à la carte à circuit imprimé (104) pour réaliser un couplage magnétique du circuit primaire (120) et du circuit secondaire (122, 124),
dans lequel la carte à circuit imprimé (104) comprend :
un enroulement primaire (120b) qui est formé en spirale autour du noyau magnétique (106) dans une couche (L4, L5) à l'intérieur de la carte à circuit imprimé (104) pour constituer une partie du circuit primaire (120) ; et
un enroulement secondaire (122b, 124b) qui est formé en spirale autour du noyau magnétique (106) dans une couche (L2, L7) à l'intérieur de la carte à circuit imprimé (104) pour constituer une partie du circuit secondaire (122, 124),
**caractérisé en ce que** des trous traversants (126) sont formés, qui connectent les deux extrémités qui se trouvent dans la même couche, de l'enroulement primaire (120b) au circuit primaire (120) d'autres couches (L1 à L3, L6 à L8), hors d'une région qui recouvre l'enroulement secondaire (122b, 124b) dans une direction des couches, et des trous traversants (128) sont formés, qui connectent les deux extrémités qui se trouvent dans la même couche, de l'enroulement secondaire (122b, 124b) au circuit secondaire (122, 124) d'autres couches (L1, L8), hors d'une région qui recouvre l'enroulement primaire (120b) dans la direction des couches.

2. Composant électronique selon la revendication 1,
**caractérisé en ce que** la carte à circuit imprimé (104) comprend en outre :
une couche isolante (L3, L6) intercalée entre la couche (L4, L5) dans laquelle est formé l'enroulement primaire (120b) et la couche (L2, L7) dans laquelle est formé l'enroulement secondaire (122b, 124b), et ne comportant pas les enroulements (120b, 122b, 124b).

3. Composant électronique selon les revendications 1 à 3,
**caractérisé en ce que** l'enroulement primaire (120b) et l'enroulement secondaire (122b, 124b) sont formés de telle façon que des régions d'enroulement de l'enroulement primaire (120b) et de l'enroulement secondaire (122b, 124b) sont superposées dans la direction des couches dans la carte à circuit imprimé (104) et les deux extrémités de chacun parmi l'enroulement primaire (120b) et l'enroulement secondaire (122b, 124b) sont en des positions ne recouvrant pas la région d'enroulement de l'autre parmi l'enroulement primaire (120b) et l'enroulement secondaire (122b, 124b) dans la direction des couches.

4. Composant électronique selon l'une quelconque des revendications 1 à 3,
**caractérisé en ce que** l'enroulement primaire (120b) et l'enroulement secondaire (122b, 124b) sont formés uniquement dans les couches à l'intérieur de la carte à circuit imprimé (104) autres que les surfaces externes de la carte à circuit imprimé (104).
